# EUROPEAN PATENT SPECIFICATION

(11) **EP 0 878 348 B1**
(45) Date of publication and mention of the grant of the patent: **23.12.1998**
(21) Application number: 97113889.6
(22) Date of filing: 12.08.1997
(51) Int. Cl.: B60N 2/42, B60R 22/00

(54) **Active control of occupant's body with a limited force restraint system in a head-on collision**
Aktive Kontrolle des Insassenkörpers mit einem Rückhaltesystem mit begrenzter Zugkraft während eines Frontalaufpralls
Contrôle actif du corps d'un occupant avec un système de retenue à force limitée lors d'un choc frontal

(43) Date of publication of application: 18.11.1998
(73) Proprietor: Habib, Mostafa S., Dr., P.O. Box 32038 (BH)
(72) Inventor: Habib, Mostafa S., Dr., P.O. Box 32038 (BH)
(74) Representative: Reinhardt, Markus

(56) References cited:
- EP-A- 0 769 414
- DE-C- 4 415 467
- GB-A- 1 043 695
- US-A- 5 518 271

## Description

### BACKGROUND OF THE INVENTION

Even though efforts have been made to provide greater passive safety for vehicle occupants by the use of seat belts and air bags, accident statistics indicate front end collisions remain as the major accident type, resulting in fatalities and severe injuries. Furthermore, recent reports indicated that the airbag (either by punch-out or membrane loading) has contributed to the fatal injury of many adults and children who could had been better off if it were not for the airbag. In automatic restraint systems, the air bag prevents the vehicle occupant's head and upper body from impacting the steering wheel, and the seat belt tightener takes up seat belt slack, applying a distributed load over the occupant's body contact area, to thereby allow the passenger to decelerate through the course of the collision. At severe impact levels, i.e., greater than a deceleration of 20 g's for occupants, these contact forces may, however, result in facial and chest bone fractures in addition to head-neck trauma.

Another prior art according to GB-A-1,043,695 discloses a safety device for damping a vehicle occupant's body motion with a safety belt during a frontal collision comprising a seat belt system, said safety device comprising a vehicle frame, a seat being slidably along a longitudinal axis relative to the vehicle frame, an arrangement 10 using a dashpot or similar devices such as friction brake, connected between the vehicle frame and the seat together with the completely buckled occupant to move as one body, via device 10, which exerts a constant restraining force on the seat. During this movement part of the crash energy can be absorbed by passive means such as a friction device as mentioned above, but there is no relative motion allowed between the occupant and the seat.

### SUMMARY OF THE INVENTION

After considerable research and experimentation the assembly of the present invention has been devised to provide automotive-safety at various degrees of collision putting into consideration the human tolerance limits. First of all, the direct contact forces applied by the safety belt have been saturated at maximum deceleration value of 20 g's, i.e., corresponding to human tolerance limits. Secondly, a supplementary control system actively dampens the occupant crash kinetic energy, mainly above 20 g's, without applying contact forces.

Therefore, it is the object of the present invention to provide an active control assembly for damping a vehicle occupant's body motion with a limited force for eliminating the drawbacks of the systems known from prior art.

This object is achieved with a control assembly comprising the features according to claim 1.

A control assembly for damping a vehicle occupant's body motion with a safety belt during a frontal collision comprising at least a seat belt system, and a control device comprising a vehicle frame, a seat being slidably along a longitudinal axis relative to the vehicle frame, a fluid motor connected between the vehicle frame and the seat, wherein said safety belt being a limited force safety belt to resist the forward motion of the occupant for a deceleration limit of up to 20 g's, wherein as the safety belt restraint force reaches the deceleration limit, the control device comes into action to dampen the rest of the remaining kinetic energy of the occupant, and said control device comprising further an active control device comprising control means for measuring the seat position relative to the longitudinal axis of the vehicle and the angular position of an occupant's upper torso relative to the lower torso for controlling a flow of fluid to said fluid motor, whereby the impact from frontal collision is dampened by energizing the fluid motor, to thereby apply a force to the seat in a direction opposite from the point of impact to dampen the forward linear movement of the seat and supplementing the safety belt system.

The control assembly of the present invention is subdivided into a restraint system with a limited resistance and an active control device. The limited force restraint system comprises, essentially, a constant-force coil spring arrangement connected to the fixed point of a three point seat belt at its free end, and to the vehicle frame through a drum and a bearing bracket at the other end. The fixed point of the seat belt is allowed to relax via the constant-force spring at and above a deceleration value of 20 g's for the occupant with a resisting force which remains constant throughout any spring extension, hence, avoiding occupant's injuries resulting from deceleration values greater than 20 g's. The active control device which supplements the safety belts, comprises a double acting hydraulic cylinder operatively connected between a vehicle seat frame and vehicle frame upon which the seat frame is mounted for slidable movement in a longitudinal direction relative to the vehicle.

As the safety belt restraint resistance saturates, the active control device is activated thereby hydraulic fluid is supplied to the hydraulic cylinder in a controlled manner, whereby a force is applied to the vehicle seat in a direction opposite to that of impact force to thereby control the forward sliding movement of the seat depending upon the severity of the impact level.

### BRIEF DESCRIPTION OF THE DRAWINGS

FIG. 1 is a diagrammatic view illustrating the angular position of the upper body portion of a vehicle occupant after a front end collision.
FIG. 2 is a diagrammatic view illustrating the safety belt with saturation and the active control of the vehicles seat and occupant's body after impact.
FIG. 3 is a rear view illustrating the constant-force coil spring mechanism taken along line 52-52 of FIG. 5.
FIG. 4 is a fragmentary view partly in section taken along lines S1-S1 of FIG. 3.
FIG. 5 is a top view taken in the direction A3 of FIG. 3.
FIG. 6 is an enlarged side elevational view partly in section, showing the hydraulic cylinder connected between the vehicle frame and the vehicle seat frame which is slidably mounted on the vehicle frame.
FIG. 7 is a view taken along line 4-4 of FIG. 6.
FIG. 8 is an enlarged, fragmentary sectional view showing the solenoid actuated pin for releasably locking the seat frame on the vehicle frame.
FIG. 9 is a diagrammatic view of the vehicle occupant having sensor operatively connected thereto for determining the angular position of the occupant.
FIG. 10 is a diagrammatic view of the rear of the seat shown in FIG. 9.
FIG. 11 is a schematic drawing of the hydraulic control circuit for the double acting hydraulic cylinder.
FIG. 12 is a schematic view of the electrical circuit for actuating the directional control valve employed in the hydraulic circuit of FIG. 11.
FIG. 13 is a schematic view of the friction slippage clutch operatively connected between the pretensioner and retractor mechanisms and the emergency locking retractor (ELR) mechanism.

### DESCRIPTION OF THE PREFERRED EMBODIMENT

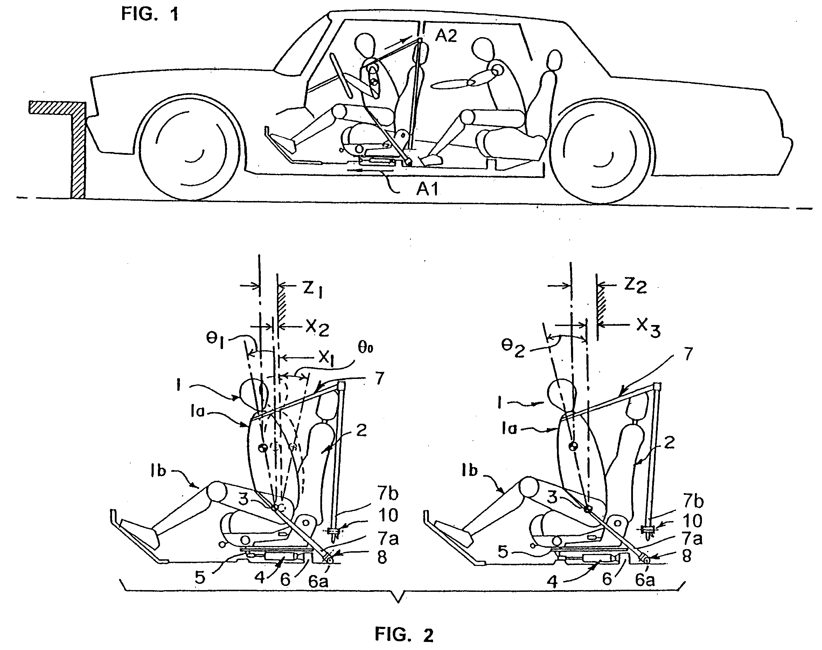

Referring to the drawings and more particularly to Figs. 1 and 2, the motion of an occupant 1 fastened by a three point seat belt 7 and vehicle seat 2 are illustrated during a front end collision. In this instance the occupant's upper body 1a, viz., the head, and upper and center torso, is considered a rigid body hingedly connected as at point 3 to the occupant's lower body 1b, viz., the lower torso and legs, fixed to the seat 2 by the safety belt 7.

To control the motion of the occupant 1 held by the seat belt 7 onto the seat 2, the three point safety belt 7 first comes into action, restraining the occupant throughout the entire crash. Depending on the severity of the impact, the seat belt system is allowed to put a restraint resistance that retards the occupant's body for up to 20 g's. Above 20 g's, the restraint system may lead to irreversible injuries, therefore, the seat belt is allowed to relax with a constant restraint resistance via a constant-force spring arrangement 8. In case of low-to-moderate severity crashes, i.e., the occupant is subjected to a deceleration value up to 20 g's, the motion of the occupant's upper body can be completely dampened by the safety belt without irreversible injury. In severe crashes, as the restraint resistance provided by the seat belt reaches the deceleration limit, i.e., 20 g's for some θ lies between -θ₀ and 0, the seat belt puts a constant resistance, as shown by the arrow A₂ in Fig. 1, corresponding to the deceleration limit, allowing the occupant's upper body to rotate about hinge 3 until it reaches position X₁, whereby the active control of the body motion comes into action in which a double acting hydraulic cylinder 4 is connected between the vehicle seat frame 5 and vehicle frame 6 upon which the seat frame 5 is slidable mounted in longitudinal direction relative to the vehicle, as shown by the arrow A1 in Fig. 1. The linear position of the seat 2 before impact is indicated at X₁, and the subsequent positions of the seat during impact are indicated at X₂ and X₃. The angular position of the occupant before impact is indicated at θ = - θ₀, and the subsequent positions during impact are indicated at θ = θ₁ and θ₂ Where the corresponding linear positions of the occupant are indicated at Z = Z₀, Z₁ and Z₂.

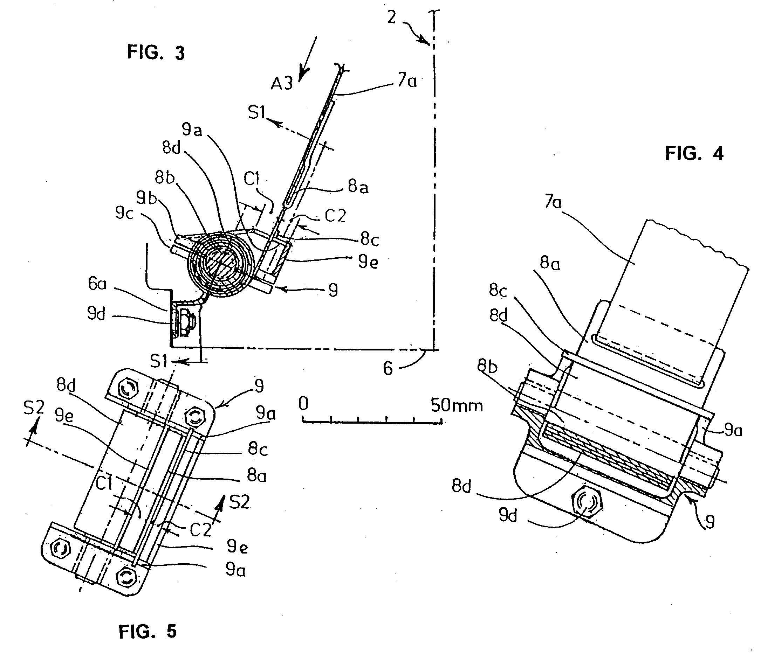

The details of the construction of the constant-force spring 8 are illustrated particularly in Figs. 3, 4 and 5. The seat belt 7, see Figs. 1 and 2, is a conventional three point seat belt having one end 7b connected to the conventional seat belt retractor with pretensioner 10, which consists of a pretensioner, retractor and emergency locking retractor (ELR) mechanisms as disclosed in Automotive Handbook, 3rd Edition, published by Robert Bosch GmbH. The fixed point of the seat belt as at 7a is connected to the constant-force spring mechanism 8 as at 8a. The spring mechanism comprises a spiral spring 8d made of a strip of spring material that is prestressed, formed into coil, and mounted on a freely rotating drum 8b. The drum 8b is supported by a bearing bracket 9. The lower part of the bearing bracket 9c is hingedly connected to the vehicle frame as at 6a in a way allowing the spring mechanism to rotate in the vertical plane via a hinged joint as at 9d. The spring is pretensioned about 1,25 times the drum diameter to thereby allow to extend at a constant force F_{L} at zero rate. The constant force F_{L} is defined as the maximum tolerable occupant's deceleration times his or her mass. The spring pretension is prevented to recoil back by a strip 8c fixed to the spring's straight end as at 8a and supported by the bearing bracket as at 9a. Since the spring end always tilts towards the direction of the tension force applied by the seat belt 7a, clearances C₁ and C₂ are provided via the guide supports 9e which are integrated with the upper part of the bearing bracket 9b.

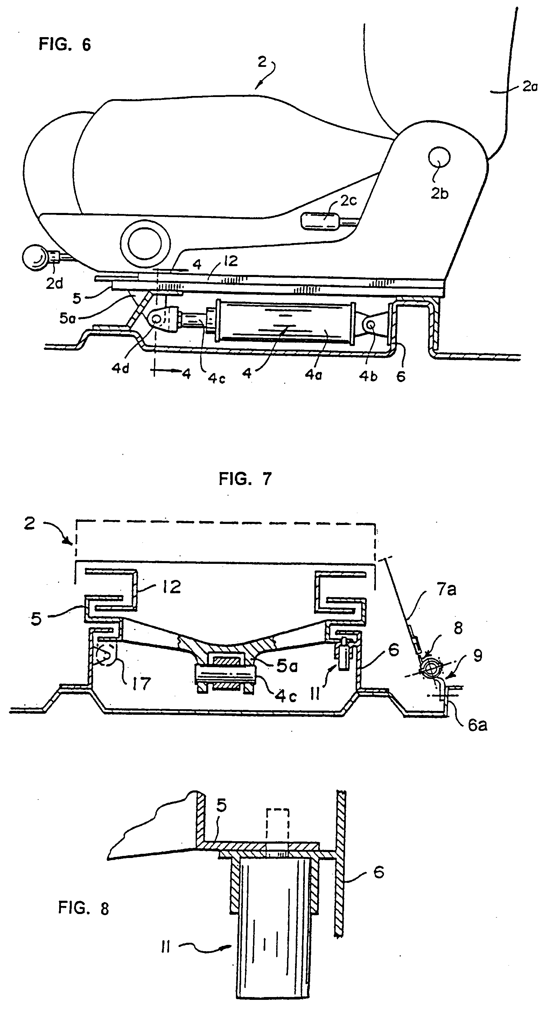

The details of the connection of the double acting hydraulic cylinder 4 between the vehicle seat frame 5 and vehicle frame 6 are illustrated in Figs. 6 and 7. The seat 2 is a conventional seat having a back rest 2a hingedly connected to the seat as at 2b and having the conventional control handles 2c and 2d for respectively adjusting the angular position of the seat rest 2a and linear position of the seat 2. The hydraulic motor 4 includes a cylinder 4a pivotally connected to the vehicle frame 6 as at 4b, and a piston rod 4c pivotally connected as at 4d to depending bracket 5a integral with seat frame 5. Movement of the seat frame 5 relative to the vehicle frame 6 is prevented by a solenoid actuated detent 11. The seat 2 is provided with a subframe 12 which is mounted on the seat frame 5 and linearly adjustable thereon by the control handle 2d.

During a severe head on collision, i.e., the occupant's deceleration value is greater than 20 g's, the detent 11 is retracted and hydraulic fluid is supplied to the hydraulic cylinder 4a in a controlled manner depending upon the angular motion θ of the occupant and the seat position X, to thereby extend the fluid motor 4, whereby a force is applied to the vehicle seat 2 in a direction opposite to the impact force, i.e., in the direction of arrow A1 Fig. 1.

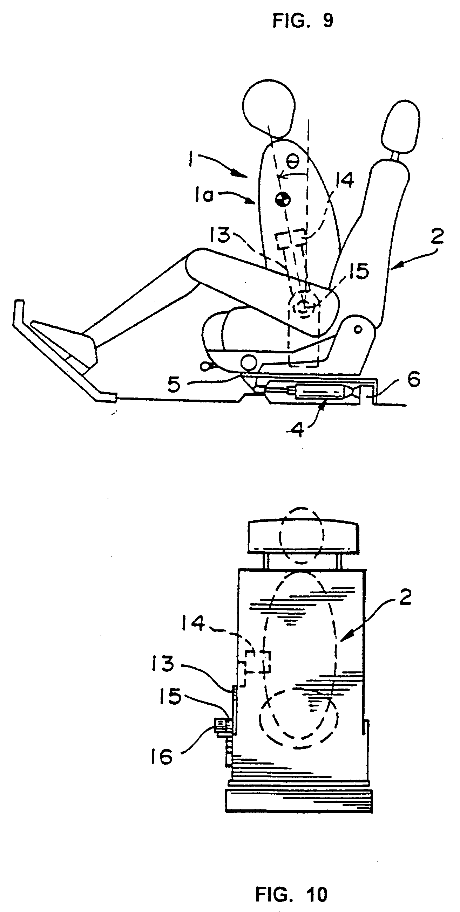

Figs. 9 and 10 illustrate the assembly for measuring the angular motion θ of the occupant 1 during impact. A rigid strip 13 is connected at its upper end to the occupant's upper torso 1a by a clip 14. The lower end of the strip 13 is pivotally connected to the seat frame at 15; the pivotal connection also includes a rotary variable differential transformer (RVDT) 16.

The seat position X is measured by a linear variable differential transformer (LVDT) 17, see Fig. 7, mounted between the seat frame 5 and vehicle frame 6.

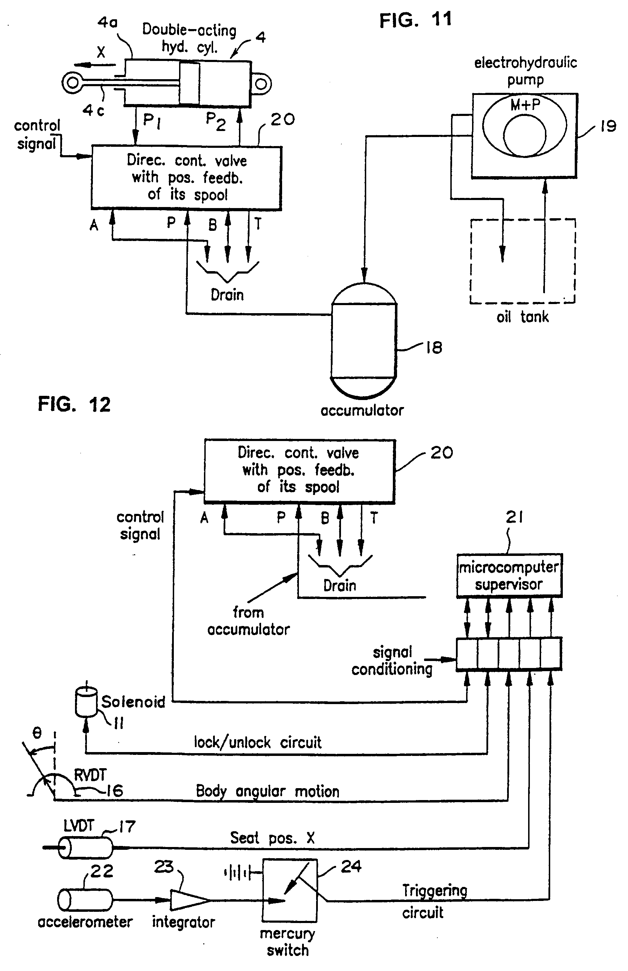

Fig. 11 illustrates the hydraulic circuit for the supply and exhaust of hydraulic fluid to the fluid motor 4. Hydraulic fluid is supplied to an accumulator 18 from a motor driven pump 19. The hydraulic fluid is fed from the accumulator 18 to a conventional directional control valve 20 of the type disclosed in Automotive Handbook, 3rd Edition, published by Robert Bosch GmbH. From the control valve 20 the hydraulic fluid is directed to either port P₁ or P₂ of the fluid motor 4 to retract or extend the fluid motor 4, to thereby slide the seat 2 in a longitudinal direction.

The position of the spool within the control valve 20 is determined by a control signal fed to the control valve 20 from the electrical circuit shown in Fig. 12. Measurements of the occupant's angular position θ are read by the RVDT 16, and the linear position X of the seat by LVDT 17. These measurements are fed to microprocessor 21 which in turn sends a control signal to the directional control valve 20. As in automatic restraint systems, such as air bags and seat belt tightening systems, a triggering circuit is provided to ensure that the active control is not energized at low impact speeds. To this end, an accelerometer 22 is mounted on the vehicle and an integrator 23 and mercury switch 24 are included in triggering circuit, whereby, if an output signal from the integrator 23 exceeds a preset value, a signal is sent to the microprocessor 21 and transmitted therefrom to the solenoid 11 for the actuation thereof.

In the operation of the active control assembly of the present invention, under normal driving conditions, the safety belt is properly fastened, the seat 2 is locked to the vehicle frame 6, and the directional control valve 20 is in the neutral position so that the fluid motor 4 is in the neutral balanced position. In the event of a frontal collision the seat belt pretensioner is activated to tighten the seat belt just before the occupant's upper body starts to move forward, thereby, the inertial emergency locking retractor (ELR) mechanism locks, so the belt restrains the occupant's forward movement. If the occupant's body center of mass comes to rest before it reaches the inertial position X₁, then the restraint system could successfully stop the occupant's forward motion. This what happens in case of low-to-moderate crashes. In case of a severe crash, the safety belt works as the primary means of occupant protection, the restraint force of the seat belt retracting system is saturated as the occupant's body retardation reaches 20 g's. This is achieved by the constant-force spring mechanisms 8 in which the belt relaxes with a constant force F_{L}. In other words, If the occupant's upper body center of mass reaches the vertical position X₁ and having the tendency to move forward beyond position X₁, then the solenoid detent 11 is retracted to release the seat 2 from the vehicle frame 6. A signal from the microprocessor 21 in response to the signals from the RVDT 16 and LVDT 17 is transmitted to the directional control valve 20, whereby pressurized hydraulic fluid is fed through port P₂ into the fluid motor cylinder 4a to apply a force against the fluid motor piston in a direction opposite to the impact force, thereby arresting the extension of the piston rod 4c and resultant forward movement of the seat 2.

After the force of the impact has dissipated, the selector valve 20 is actuated to supply hydraulic fluid to the fluid motor 4 to return the seat to the original position, whereby the solenoid detent 11 is actuated to once again lock the seat frame 5 to the vehicle frame 6. In the same time, the spring 8a recoils back once again to its original position.

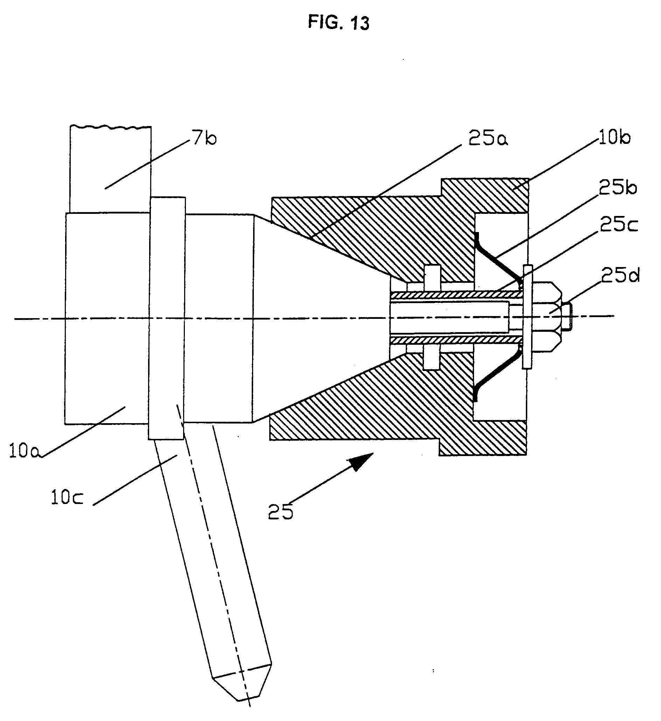

The constant-force mechanism 8 connected to the seat belt fixed point 7a of the invention which provides a safe restraint system as described above may alternatively be replaced by a friction slippage clutch 25, as may be seen in Fig. 13. The compressed friction surfaces 25a slip after the load applied by the belt to decelerate the occupant's upper body has reached the limit value of the human body resistance F_{L}, resulting in occupant protection against overload applied by the safety belt. Fig. 13 shows a schematic drawing of the location and structure of the slippage clutch. It is located between the retractor 10a and pretensioner 10c mechanisms and the ELR mechanism 10b. The limiting belt load F_{L} is attained by a conical spring 25b which puts a pressure on the friction surfaces, via nut 25d, to meet the required maximum constant moment of friction transmitted by the clutch. A sleeve 25c which has a definite length is used to determine the maximum allowable deflection of spring 25b. In this case, the fixed point of the safety belt as at 7a should be directly fixed to vehicle frame 6a via a hinge as at 9d.

From the above description, it will readily be apparent to those skilled in the art that the assembly of the present invention provides an active control device that supplements the seat belt restraint system with saturation for resisting the forward inertial movement of the vehicle occupant to protect the occupant's head and upper body from impacting the steering wheel or dashboard, and also preventing facial and chest bone fractures and head-neck trauma experienced when only airbags and conventional seat belts are employed.

An active control device and a limited force safety belt system are employed to control the motion of a vehicle occupant's body in a head-on collision. The safety belt system comprises a constant-force coil spring mechanism connected to the fixed point of a three point seat belt at its free end, and to the vehicle frame through a drum and a bearing bracket at the other end. The occupant's body is primarily restrained by the safety belt up to a deceleration value corresponding to human tolerance limits, after which the belt relaxes providing the occupant with a saturated resistance thereby activating the active control device which comprises a double-acting hydraulic cylinder connected between a vehicle seat frame and a vehicle frame upon which the seat frame is slidably mounted for movement in a longitudinal direction relative to the vehicle. The seat frame is releasably fixed to the vehicle frame by a solenoid actuated detent controlled by a microprocessor electrically connected to an accelerometer. A linear variable differential transformer measures the linear position of the seat and a rotary variable differential transformer measures the angular motion of the occupant's body. The transformers transmit signals to the microprocessor which in turn transmits signals responsive thereto to a directional control valve which controls the hydraulic fluid supplied to and exhausted from the double-acting hydraulic cylinder for controlling the forward sliding movement of the seat depending upon the severity of the impact level. This active control device actively dampens the remaining occupant's kinetic motion thus supplementing the safety belt.

It is to be understood that the form of the invention herewith shown and described is to be taken as a preferred example of the same, and that various change in the shape, size and arrangement of parts may be resorted to, without departing from the scope of the subjoined claims.

## Claims

1. A control assembly for damping a vehicle occupant's body motion with a safety belt during a frontal collision comprising a seat belt system (7), and a control device comprising a vehicle frame (6), a seat (2) being slidably along a longitudinal axis relative to the vehicle frame (6), a fluid motor (4) connected between the vehicle frame (6) and the seat (2), **characterized in that**
said safety belt being a limited force safety belt system to resist the forward motion of the occupant (1) for a deceleration limit of up to 20 g's, wherein as the safety belt restraint force reaches the deceleration limit, the control device comes into action to dampen the rest of the remaining kinetic energy of the occupant (1), and
said control device comprising further an active control device comprising control means (16, 17) for measuring the seat position relative to the longitudinal axis of the vehicle and the angular position of an occupant's upper torso (1a) relative to the lower torso (1b) for controlling a flow of fluid to said fluid motor (4), whereby the impact from frontal collision is dampened by energizing the fluid motor (4), to thereby apply a force to the seat (2) in a direction opposite from the point of impact to dampen the forward linear movement of the seat (2) and supplementing the safety belt system (7).

2. A control assembly according to claim 1, characterized in that said limited force seat belt system (7) being connected with its fixed point to a constant-force coil spring mechanism to resist the forward motion of the occupant (1) for a deceleration limit of up to 20 g's thereby allowing the spring at the seat belt fixed point to extend at a constant resisting force corresponding to occupant's maximum tolerable deceleration limit through any spring extension, and in that said active control assembly comprises a hydraulic circuit connected to said fluid motor (4).

3. A control assembly according to claim 1 or 2, wherein said limited force seat belt system comprises a constant-force coil spring (8d) with its free end supports the fixed point of a three point seat belt, and mounted on a freely rotating drum supported on a bearing bracket hinged to the vehicle frame and supports a guide for and an initial extension of the constant-force spring.

4. A control assembly according to any one of claims 1 to 3, wherein a solenoid actuated detent (11) is mounted between the vehicle frame (6) and a seat frame (5) for releasably holding the seat frame against sliding movement on said vehicle frame (6).

5. A control assembly according to any one of claims 1 to 4, wherein the fluid motor (4) comprises a cylinder connected to the vehicle frame (6) and a piston rod connected to the seat frame.

6. A control assembly according to claim 2, wherein said hydraulic circuit comprises an hydraulic fluid reservoir, a motor driven pump (19), an accumulator (18), said motor driven pump communicating with said reservoir and said accumulator for supplying hydraulic fluid from said reservoir to said accumulator, and directional control valve (20) communicating with said accumulator and said cylinder, whereby pressurized hydraulic fluid is supplied to and exhausted from the cylinder for controlling the extension and retraction of said piston rod.

7. A control assembly according to claim 6, wherein said control means comprises, a linear variable differential transformer (17) operatively connected between the vehicle frame and seat frame for measuring the seat position relative to the longitudinal axis of the vehicle, a rotary variable differential transformer (16) connected to the seat frame and means for connecting the rotary variable differential transformer to an occupant in said seat for measuring the angular motion of the occupant's body, a microprocessor (21), and an electrical circuit connected between said linear and rotary variable differential transformers and said microprocessor, and between said microprocessor and said directional control valve (20), whereby signals are transmitted to the directional control valve from said microprocessor in response to signals from said linear and rotary variable differential transformers.

8. A control assembly according to claim 7, wherein the electrical circuit includes a triggering circuit, said triggering circuit comprises an accelerometer (22) mounted on said vehicle, an electrical circuit connecting said accelerometer to said microprocessor (21), and a solenoid actuated detent (11) mounted between the vehicle frame and seat frame for releasably holding the seat frame against sliding movement on said vehicle frame, an electrical circuit connecting said solenoid actuated detent to said microprocessor, whereby during a frontal collision the accelerometer transmits a signal to the microprocessor which in turn transmits a responsive signal to the solenoid actuated detent, to thereby retract the detent to release the seat frame from the vehicle frame.

9. A control assembly according to claim 7, wherein the means for connecting the rotary variable differential transformer to an occupant of the seat comprises a rigid strip (13), one end of said rigid strip being connected to the occupant's upper torso, and the opposite end of the rigid strip being connected to the rotary variable differential transformer, whereby the angular motion of the occupant's upper torso relative to the lower torso is transmitted to the rotary variable differential transformer.

10. A control assembly according to any one of claims 1 to 9, characterized by means for energizing the fluid motor (4) to dampen the impact from a frontal collision by applying a force to the vehicle seat (2)in a direction opposite from the point of impact to dampen the forward linear movement of the seat and associated occupant and thus supplementing the limited force safety belt system (7)

## Patentansprüche

1. Regelungsanordnung zum Abmildern einer Bewegung eines Körpers eines Insassen eines Fahrzeuges, der einen Sicherheitsgurt trägt, während einer Frontalkollision, mit einem Sitzgurtsystem (7), und mit einer Regelungsvorrichtung, umfassend einen Rahmen (6) des Fahrzeuges, einen Sitz (2), der entlang einer Längsachse relativ zu dem Rahmen (6) des Fahrzeuges verlagerbar ist, einen Fluidmotor (4), der zwischen dem Rahmen (6) des Fahrzeuges und dem Sitz (2) zwischengeschaltet ist, **dadurch gekennzeichnet**, daß der Sicherheitsgurt in Form eines Sicherheitsgurtsystems mit begrenzter Rückhaltekraft vorgesehen ist, um der nach vorne gerichteten Bewegung des Insassen (1) bis zu einer Verzögerungsgrenze von bis zu 20 g zu widerstehen, wobei, wenn die Rückhaltekraft des Sicherheitsgurtes diese Verzögerungsgrenze erreicht, die Regelungsvorrichtung in Aktion tritt, um den Rest der kinetischen Energie des Insassen (1) abzudämpfen, und daß die Regelungsvorrichtung weiterhin eine aktive Regelungsvorrichtung umfaßt, die eine Regelungseinrichtung (16, 17) aufweist, um die Position des Sitzes relativ zu der Längsachse des Fahrzeuges zu bestimmen, sowie um die Winkellage eines Oberkörpers (1a) des Insassen relativ zu einem Unterkörper (1b) des Insassen zu bestimmen, um den Fluß eines Fluids in den Fluidmotor (4) zu regeln, wobei der Aufprall aus der Frontalkollision abgedämpft wird, indem der Fluidmotor (4) in Betrieb gesetzt wird, um eine Kraft auf den Sitz (2) aufzubringen, in einer Richtung, die entgegengesetzt zu dem Aufprall verläuft, um die nach vorne gerichtete lineare Bewegung des Sitzes (2) zu dämpfen und um das Sitzgurtsystem (7) zu unterstützen.

2. Regelungsanordnung nach Anspruch 1, dadurch gekennzeichnet, daß das Sicherheitsgurtsystem mit begrenzter Rückhaltekraft (7) mit seinem Festpunkt mit einem SchraubenfederMechanismus mit Konstantkraft verbunden ist, um der nach vorne gerichteten Bewegung des Insassen (1) bis zu einer Verzögerungsgrenze von bis zu 20 g zu widerstehen, wodurch es der Feder an dem Festpunkt des Sitzgurtes ermöglicht ist, sich mit einer konstanten Widerstandskraft zu vergrößern, die der maximal erlaubten Verzögerungsgrenze des Insassen während der Federerweiterung entspricht, und daß die aktive Regelungsvorrichtung einen hydraulischen Kreis umfaßt, der mit dem Fluidmotor (4) verbunden ist.

3. Regelungsanordnung nach Anspruch 1 oder 2, wobei das Sicherheitsgurtsystem mit begrenzter Rückhaltekraft (7) eine Schraubenfeder (8d) mit Konstantkraft umfaßt, deren freies Ende den Festpunkt eines Dreipunktgurtes hält, und die auf einer frei drehbaren Trommel montiert ist, die an einem Träger gelagert ist, der an dem Rahmen des Fahrzeuges angelenkt ist, und die eine Führungseinrichtung trägt, zum Führen einer anfänglichen Erweiterung der Feder mit Konstantkraft.

4. Regelungsanordnung nach einem der Ansprüche 1 bis 3, wobei zwischen dem Rahmen (6) des Fahrzeuges und einem Rahmen (5) des Sitzes eine Feststelleinrichtung (11) montiert ist, die über einen Elektromagneten zu betätigen ist, um den Rahmen des Sitzes freigebbar festzuhalten, nämlich gegen eine gleitende Verlagerung des Rahmens des Sitzes gegenüber dem Rahmen (6) des Fahrzeuges wirkend.

5. Regelungsanordnung nach einem der Ansprüche 1 bis 4, wobei der Fluidmotor (4) einen Zylinder aufweist, der mit dem Rahmen (6) des Fahrzeuges verbunden ist, sowie eine Kolbenstange aufweist, die mit dem Rahmen des Sitzes verbunden ist.

6. Regelungsanordnung nach Anspruch 2, wobei der hydraulische Kreis ein Reservoir für das hydraulische Fluid, eine durch einen Motor angetriebene Pumpe (19), und einen Sammelbehälter (18) aufweist, wobei die durch den Motor angetriebene Pumpe mit dem Reservoir und mit dem Sammelbehälter in Verbindung steht, um hydraulisches Fluid von dem Reservoir zu dem Sammelbehälter zu fördern, sowie er ein gerichtetes Regelventil (20) aufweist, welches mit dem Sammelbehälter und dem Zylinder in Verbindung steht, wobei unter Druck stehendes hydraulisches Fluid zu dem Zylinder gefördert und von dem Zylinder abgeleitet wird, um die verlängernde und verkürzende Bewegung der Kolbenstange zu steuern.

7. Regelungsanordnung nach Anspruch 6, wobei die Regelungseinrichtung einen linearen variablen Differentialumformer (17) umfaßt, der zwischen dem Rahmen des Fahrzeuges und dem Rahmen des Sitzes wirkt, um die Position des Sitzes relativ zu der Längsachse des Fahrzeuges zu messen, sowie einen variablen Differentialumformer (16) für Drehungen umfaßt, der mit dem Rahmen des Sitzes verbunden ist, sowie mit einer Einrichtung zum Verbinden des variablen Differentialumformers (16) für Drehungen mit einem Insassen, der sich in dem Sitz befindet, um die winkelmäßige Verlagerung des Körpers des Insassen zu messen, sowie einen Mikroprozessor (21) und einen elektrischen Schaltkreis umfaßt, der den Mikroprozessor und die variablen Differentialumformer für Drehungen und Verschiebungen verbindet, sowie der Schaltkreis zwischen dem Mikroprozessor und dem gerichteten Regelventil (20) eine Verbindung schafft, wobei die Signale von dem Mikroprozessor an das gerichtete Regelventil übertragen werden, in Antwort auf Signale von den variablen Differentialumformern für Drehung und Verschiebung.

8. Regelungsanordnung nach Anspruch 7, wobei der elektrische Schaltkreis einen Auslösekreis umfaßt, der einen Beschleunigungsmesser (22) aufweist, der an dem Fahrzeug montiert ist, sowie einen elektrischen Kreis aufweist, der den Beschleunigungsmesser mit dem Mikroprozessor (21) verbindet, sowie eine Feststelleinrichtung (11), die durch einen Elektromagneten betätigbar ist, die zwischen dem Rahmen des Fahrzeuges und dem Rahmen des Sitzes montiert ist, um den Rahmen des Sitzes freigebbar festzuhalten, gegen eine gleitende Verlagerung des Rahmens des Sitzes gegenüber dem Rahmen des Fahrzeuges, sowie einen elektrischen Kreis aufweist, der die Feststelleinrichtung, die durch einen Elektromagneten betätigbar ist, mit dem Mikroprozessor verbindet, wobei während einer Frontalkollision der Beschleunigungsmesser ein Signal an den Mikroprozessor überträgt, der wiederum ein Antwortsignal an die Feststelleinrichtung überträgt, die durch einen Elektromagneten betätigbar ist, um dadurch die Feststelleinrichtung zu lösen, um den Rahmen des Sitzes von dem Rahmen des Fahrzeuges freizugeben.

9. Regelungsanordnung nach Anspruch 7, wobei die Einrichtung zum Verbinden des variablen Differentialumformers (16) für Drehungen mit dem Insassen einen starren Streifen (13) umfaßt, wobei ein Ende des starren Streifens mit dem Oberkörper des Insassen verbunden ist und wobei das andere Ende des starren Streifens mit dem variablen Differentialumformer für Drehung verbunden ist, wobei die winkelmäßige Bewegung bzw. Drehbewegung des Oberkörpers des Insassen relativ zu dem Unterkörper auf den variablen Differentialumformer für Drehung übertragen wird.

10. Regelungsanordnung nach einem der Ansprüche 1 bis 9, gekennzeichnet, durch eine Einrichtung zum Betätigen des Fluidmotors (4), um den Aufprall aus einer Frontalkollision zu dämpfen, indem eine Kraft auf den Sitz (2) des Fahrzeuges aufgebracht wird, und zwar in einer Richtung entgegengesetzt zu dem Aufprall (-punkt), um die nach vorne gerichtete lineare Bewegung des Sitzes und des zugeordneten Insassen zu dämpfen, wodurch das Sicherheitsgurtsystem mit begrenzter Rückhaltekraft (7) unterstützt wird.

## Revendications

1. Ensemble de contrôle destiné à amortir le déplacement du corps d'un occupant d'un véhicule grâce à une ceinture de sécurité au cours d'un choc frontal comprenant un système de ceinture de sécurité (7), et un dispositif de contrôle comprenant un châssis de véhicule (6), un siège (2) pouvant coulisser le long d'un axe longitudinal par rapport au châssis du véhicule (6), un hydromoteur (4) raccordé entre le châssis du véhicule (6) et le siège (2), caractérisé en ce que
ladite ceinture de sécurité (7) est un système de ceinture de sécurité à force limitée destiné à résister à un déplacement vers l'avant de l'occupant (1) pour atteindre une limite de décélération jusqu'à 20 g, dans lequel, lorsque la force de retenue de la ceinture de sécurité (7) atteint la limite de décélération, le dispositif de contrôle entre en action pour amortir le reste de l'énergie cinétique restante de l'occupant (1), et
ledit dispositif de contrôle comprend en outre un dispositif de contrôle actif comprenant des moyens de contrôle (16, 17) pour mesurer la position du siège par rapport à l'axe longitudinal du véhicule et la position angulaire de la partie supérieure du torse d'un occupant (1a) par rapport à la partie inférieure du torse de l'occupant (1b) pour contrôler un écoulement de fluide vers ledit hydromoteur (4), grâce à quoi l'impact résultant d'un choc frontal est amorti grâce à l'activation de l'hydromoteur (4), afin d'appliquer ainsi une force sur le siège (2) dans un sens opposé au point d'impact afin d'amortir le déplacement linéaire vers l'avant du siège (2) et d'apporter un complément au système de ceinture de sécurité (7).

2. Ensemble de contrôle selon la revendication 1, caractérisé en ce que ledit système de ceinture de sécurité à force limitée (7) est raccordé par son point fixe au mécanisme de ressort à boudin à force constante pour résister au déplacement vers l'avant de l'occupant (1) afin d'atteindre une limite de décélération jusqu'à 20 g, ce qui permet ainsi au ressort au niveau du point fixe de la ceinture de sécurité de s'allonger selon une force de résistance constante correspondant à la limite de décélération maximum tolérable de l'occupant par l'intermédiaire de n'importe quel allongement du ressort, ledit ensemble de contrôle actif comprenant un circuit hydraulique raccordé audit hydromoteur (4).

3. Ensemble de contrôle selon la revendication 1 ou 2, caractérisé en ce que ledit système de ceinture de sécurité à force limitée (7) comprend un ressort à boudin à force constante (8d) dont l'extrémité libre supporte le point fixe d'une ceinture de sécurité à trois points, et est monté sur un tambour à rotation libre supporté par une console porteuse fixée au moyen d'une charnière sur le châssis du véhicule et supporte un guide pour le, et un allongement initial du, ressort à force constante.

4. Ensemble de contrôle selon l'une quelconque des revendications 1 à 3, caractérisé en ce qu'un dispositif d'arrêt actionné par un solénoïde (11) est monté entre le châssis du véhicule (6) et un châssis de siège (5) afin de retenir, pour pouvoir le libérer, le châssis de siège dans le cas d'un déplacement coulissant sur ledit châssis du véhicule (6).

5. Ensemble de contrôle selon l'une quelconque des revendications 1 à 4, caractérisé en ce que l'hydromoteur (4) comprend un cylindre raccordé au châssis du véhicule (6) et une tige de piston raccordée au châssis de siège.

6. Ensemble de contrôle selon la revendication 2, caractérisé en ce que ledit circuit hydraulique comprend
un réservoir de fluide hydraulique,
un groupe motopompe (19),
un accumulateur (18),
ledit groupe motopompe communicant avec ledit réservoir et ledit accumulateur pour fournir du fluide hydraulique entre ledit réservoir et ledit accumulateur,
et une soupape de commande directionnelle (20) communicant avec ledit accumulateur et ledit cylindre, grâce à quoi le fluide hydraulique sous pression est fourni au et sorti du cylindre afin de contrôler l'allongement et la rétraction de ladite tige de piston.

7. Ensemble de contrôle selon la revendication 6, caractérisé en ce que ledit moyen de contrôle comprend
un transformateur linéaire à différentiel variable (17) raccordé, pour fonctionner, entre le châssis du véhicule et le châssis de siège afin de mesurer la position du siège par rapport à l'axe longitudinal du véhicule,
un transformateur rotatif à différentiel variable (16) raccordé au châssis de siège
et des moyens de raccordement du transformateur rotatif à différentiel variable à un occupant assis dans ledit siège, afin de mesurer le déplacement angulaire du corps de l'occupant,
un microprocesseur (21) et un circuit électrique raccordé entre lesdits transformateurs linéaire et rotatif à différentiel variable et ledit microprocesseur, et entre ledit microprocesseur et ladite soupape de commande directionnelle (20), grâce à quoi des signaux sont transmis à la soupape de commande directionnel à partir du microprocesseur, en réponse à des signaux provenant desdits transformateurs linéaire et rotatif à différentiel variable.

8. Ensemble de contrôle selon la revendication 7, caractérisé en ce que le circuit électrique comprend
un circuit de déclenchement, ledit circuit de déclenchement comprenant un accéléromètre (22) monté sur ledit véhicule,
un circuit électrique raccordant ledit accéléromètre audit microprocesseur (21),
et un dispositif d'arrêt actionné par solénoïde (11) monté entre le châssis du véhicule et le châssis de siège afin de retenir, de façon à pouvoir le libérer, le châssis de siège contre le déplacement coulissant sur ledit châssis du véhicule,
un circuit électrique raccordant ledit dispositif d'arrêt actionné par solénoïde audit microprocesseur, grâce à quoi, au cours d'un choc frontal, l'accéléromètre transmet un signal au microprocesseur, qui, à son tour, transmet un signal de réponse au dispositif d'arrêt actionné par solénoïde, afin de rétracter ainsi le dispositif d'arrêt pour libérer le châssis de siège du châssis du véhicule.

9. Ensemble de contrôle selon la revendication 7, caractérisé en ce que les moyens de raccordement du transformateur rotatif à différentiel variable à l'occupant du siège comprennent une bande rigide (13), une extrémité de cette bande rigide étant raccordée à la partie supérieure du torse de l'occupant, et l'extrémité opposée de cette bande rigide étant raccordée au transformateur rotatif à différentiel variable, grâce à quoi le déplacement angulaire de la partie supérieure du torse de l'occupant par rapport à la partie inférieure de celui-ci est transmis au transformateur rotatif à différentiel variable.

10. Ensemble de contrôle selon l'une quelconque des revendications 1 à 9, caractérisé par un moyen permettant d'activer l'hydromoteur (4) afin d'amortir l'impact résultant d'un choc frontal en appliquant une force au siège du véhicule (2) dans un sens opposé au point d'impact, afin d'amortir le déplacement linéaire vers l'avant du siège et de l'occupant associé, et ainsi d'apporter un complément au système de ceinture de sécurité à force limitée (7).
